# EUROPEAN PATENT APPLICATION

(11) **EP 4 723 285 A1**
(43) Date of publication of application: **08.04.2026**
(21) Application number: 23952112.3
(22) Date of filing: 20.12.2023
(51) Int. Cl.: H01M 10/0583, H01M 10/052

(54) **POLE PIECE FOLDING CONTROL METHOD AND APPARATUS, POLE PIECE FOLDING APPARATUS, AND BATTERY PRODUCTION SYSTEM**

(30) Priority: 12.09.2023 CN 202311168985
(71) Applicant: Contemporary Amperex Technology Co., Limited, Ningde, Fujian 352100 (CN)
(72) Inventor: WU, Kai, Ningde, Fujian 352100 (CN); PAN, Youcheng, Ningde, Fujian 352100 (CN); OU, Fuming, Ningde, Fujian 352100 (CN); CUI, Renhao, Ningde, Fujian 352100 (CN); LIN, Jiang, Ningde, Fujian 352100 (CN); JIANG, Liang, Ningde, Fujian 352100 (CN); WU, Bingzhao, Ningde, Fujian 352100 (CN)
(74) Representative: Gong, Jinping
(86) International application number: PCT/CN2023/140227
(87) International publication number: WO 2025/055190

(57) **Abstract**

The present application relates to a pole piece folding control method and apparatus, a pole piece folding apparatus, and a battery production system. During the folding process of a pole piece group, a conveying component is controlled to operate, and the pole piece group is driven to move towards a stacking platform. When a lamination area on the stacking platform starts to fold or has been folded, at least one of the conveying component and the stacking plaform is controlled to move such that the distance between a conveying end of the conveying component and at least part of an operating surface of the stacking platform is pulled open. In this way, a clearance space can be provided for folding of the lamination area, thereby facilitating stress relief of the lamination area during folding, reducing a pulling force of the lamination area in a folded state on a non-folded lamination area, and reducing a degree of bending and warping of the lamination area at a folding position. Thus, the probability of abnormal gaps being generated at the folding position of a laminated structure is reduced, thereby effectively reducing the probability of lithium deposition at the folding position of the electrode, and improving the quality of the laminated battery.

## Description

### CROSS-REFERENCE

The present application refers to the Chinese Patent Application No. 2023111689854 entitled "ELECTRODE PLATE FOLDING CONTROL METHOD AND APPARATUS, ELECTRODE PLATE FOLDING APPARATUS, AND BATTERY PRODUCTION SYSTEM" filed on September 12, 2023, which is incorporated herein by reference in its entirety.

### TECHNICAL FIELD

The present application relates to the technical field of battery production, and in particular, to an electrode plate folding control method and apparatus, an electrode plate folding apparatus, and a battery production system.

### BACKGROUND

An electrode assembly is a component that undergoes an electrochemical reaction in a battery, and is mainly formed by winding or stacking a positive electrode plate and a negative electrode plate. A separator is usually disposed between the negative electrode plate and the positive electrode plate. During the stacking process, the stacked negative electrode plate, separator, and positive electrode plate can be folded. However, due to the defects of the traditional folding mode of the electrode plates, lithium plating easily occurs at the folding position of the electrode plates, which affects the quality of the stacked battery.

### SUMMARY

Based on this, it is necessary to provide an electrode plate folding control method and apparatus, an electrode plate folding apparatus, and a battery production system, to reduce the probability of lithium plating at the folding position of the electrode plates and improve the quality of a stacked battery.

According to a first aspect, the present application provides an electrode plate folding control method, an electrode plate folding mechanism including a stacking platform and a conveying component configured to convey an electrode plate group, where the electrode plate group is provided with a plurality of stacking areas in a length direction thereof; and the electrode plate folding control method includes the following steps: controlling the conveying component to drive the electrode plate group to be conveyed towards the stacking platform; and controlling, in response to the stacking areas being folded on the stacking platform, the conveying component and/or the stacking platform to move, such that a distance of a connecting line between a conveying end of the conveying component that acts on the electrode plate group and at least a portion of a working surface of the stacking platform increases.

According to the above electrode plate folding control method, in the process of folding the electrode plate group, the conveying component is controlled to operate to drive the electrode plate group to move towards the stacking platform. When the stacking areas begin to be folded or have been folded on the stacking platform, at least one of the conveying component and the stacking platform is controlled to move such that the conveying end of the conveying component and at least a portion of the working surface of the stacking platform are pulled apart. In this way, a clearance space can be provided for the folding of the stacking areas, thereby facilitating stress relief of the stacking areas during folding, reducing the pulling force of a stacking area in a folded state on a non-folded stacking area, and reducing the degree of bending and warping of the stacking area at the folding position. Thus, the probability of abnormal gaps being generated at the folding position of a stacked structure is reduced, thereby effectively reducing the probability of lithium plating of the electrode plate at the folding position, and improving the quality of the stacked battery.

In some embodiments, the step of controlling the conveying component and/or the stacking platform to move includes: controlling the conveying component and/or the stacking platform to continuously and periodically execute a movement strategy in a preset direction, the movement strategy including driving at least one of the conveying component and the stacking platform to move in a direction away from each other; and driving at least one of the conveying component and the stacking platform to move in a direction close to each other, where the preset direction is a direction in which the conveying component is spaced from the stacking platform. In this design, in the process of folding the electrode plate group, at least one of the conveying component and the stacking platform is controlled to periodically execute the movement strategy, to provide effective clearance space for the folding process of the stacking areas, which facilitates stress relief of the stacking areas, reduces the degree of bending and warping of the stacking areas, and improves the quality of the stacked battery.

In some embodiments, the step of executing the movement strategy includes: controlling a movement amount of at least one of the conveying component and the stacking platform in the direction away from each other to be a first displacement; and controlling a movement amount of at least one of the conveying component and the stacking platform in the direction close to each other to be a second displacement, where the second displacement is less than or equal to the first displacement. In this way, during the execution of the movement strategy, the movement amount of the conveying component or the stacking platform in the direction close to each other is controlled to be at least not greater than the movement amount of the conveying component or the stacking platform in the direction away from each other. On the premise of reducing the bending degree of the electrode plate group at the folding position, the distance between the conveying component and the stacking platform remains unchanged or increases, which facilitates the folding and stable operation of the electrode plate group to a certain extent.

In some embodiments, the first displacement is greater than the second displacement, and a difference value therebetween is denoted as Δ_{W}, and a thickness of the electrode plate group in the stacking areas is denoted as h, where 1 ≤ Δ W/h ≤ 5. In this way, the value of Δ_{W/h} is controlled to be 1 to 5, such that after each folding, enough space is maintained between the conveying component and the stacking platform, which facilitates stable folding of the electrode plate group on the stacking platform and improves the stability of the folding process.

In some embodiments, Δ_{W/h} further satisfies the following condition: 2 ≤ Δ_{W/h} ≤ 3.In this way, the value of Δ_{W/h} is further controlled to be 2 to 3, such that after each folding, the space between the conveying component and the stacking platform is more reasonably controlled, thereby enabling the folding process of the electrode plate group on the stacking platform to be more stable.

In some embodiments, after the step of controlling the movement amount of at least one of the conveying component and the stacking platform in the direction close to each other to be the second displacement, the method includes: controlling, in response to each time executing the movement strategy at least once, the conveying component and/or the stacking platform to move by a preset displacement amount in the direction away from each other if the first displacement is equal to the second displacement. Thus, the configuration can effectively compensate for space reduction due to increased folding cycles, facilitating the folding of the electrode plate group. Simultaneously, it promotes the stress relief of the electrode plate group during the folding process, improving the quality of the stacked battery.

In some embodiments, a ratio of the preset displacement amount to a thickness of the electrode plate group in the stacking areas is denoted as α, where 1 ≤ α ≤ 5. In this way, the ratio of the preset displacement amount to the thickness of the electrode plate group in the stacking areas is controlled to be 1 to 5, such that the conveying component or the stacking platform retracts by an appropriate displacement amount after folding. This leaves a proper space for the electrode plate group between the conveying component and the stacking platform, thereby implementing a stable and effective folding process.

In some embodiments, α further satisfies the following condition: 2 ≤ α ≤ 3. In this way, the value of α is further controlled to be 2 to 3, such that after each folding, the space between the conveying component and the stacking platform is more reasonably controlled, thereby enabling the folding process of the electrode plate group on the stacking platform more stable.

In some embodiments, in a case that at least one of the conveying component and the stacking platform moves by the first displacement in the direction away from each other, a displacement amount of a conveying end of the conveying component conveying the electrode plate group in a direction facing the stacking platform is controlled to be a third displacement, where the third displacement is greater than the first displacement. In this way, the third displacement is controlled to be greater than the first displacement, such that an excessive conveying amount can drive the stacking areas to continue to be folded on the stacking platform. Therefore, when the space between the conveying component and the stacking platform increases to release stress, the electrode plate group can stably continue to be folded.

In some embodiments, a ratio of the third displacement to a length of the stacking area is denoted as η, where 0.3 ≤ η ≤ 0.7. In this way, the ratio of the third displacement to the length of the stacking area is controlled to be 0.3 to 0.7, such that at least 0.3 of the stacking areas in the electrode plate group are conveyed when the conveying component or the stacking platform completes the first phase of the movement strategy. This helps reduce the bending and warping of the electrode plate group at the folding position, thereby improving the quality of the stacked battery.

In some embodiments, η further satisfies the following condition: 0.45 ≤ η ≤ 0.55. In this way, the ratio of the third displacement to the length of the stacking area is further controlled to be 0.45 to 0.55, which is beneficial to further effectively controlling the folding process of the electrode plate group, thereby making the quality of the stacked battery better controllable.

In some embodiments, a ratio of the first displacement to the length of the stacking area is denoted as λ, where 0.1 ≤ λ ≤ 0.6. In this way, the value of the ratio of the first displacement to the length of the stacking area is controlled to be 0.1 to 0.6, such that both stress relief in the folding process and the folding efficiency can be effectively considered.

In some embodiments, λ further satisfies the following condition: 0.4 ≤ λ ≤ 0.5. In this way, the value of the ratio of the first displacement to the length of the stacking area is further controlled to be 0.4 to 0.5, such that the folding process of the electrode plate group can be more accurately controlled.

In some embodiments, after the movement strategy is executed, the displacement amount of the conveying end of the conveying component conveying the electrode plate group in the direction facing the stacking platform is the length of at least one of the stacking areas. In this way, the period of the movement strategy is associated with the conveying period of the conveying component, such that the folding quality of the electrode plate group is more controllable, and the consistency of the product is better.

In some embodiments, before the step of controlling the conveying component and/or the stacking platform to move, the method further includes: controlling a minimum distance between the conveying end of the conveying component and a working surface of the stacking platform to be an initial distance, where a ratio of the initial distance to the length of the stacking area is denoted as γ, where 1.2 ≤ γ ≤ 2. In this way, the ratio of the initial distance to the length of the stacking area is controlled to be 1.2 to 2, such that a cantilevered stacking area is provided between the conveying component and the stacking platform, the folding process can be stably performed, and meanwhile, the folding efficiency is improved.

In some embodiments, γ further satisfies the following condition: 1.3 ≤ γ ≤ 1.6. In this way, the ratio of the initial distance to the length of the stacking area is further controlled to be 1.3 to 1.6, such that the folding of the electrode plate group can be more accurately controlled, thereby further improving the stability and the folding efficiency in the folding process.

In some embodiments, in response to the step of the stacking areas being folded on the stacking platform, the method includes: controlling the displacement amount of the conveying end of the conveying component conveying the electrode plate group in the direction facing the stacking platform to be a fourth displacement, where a ratio of the fourth displacement to the length of the stacking area is denoted as ε, where 2 ≤ ε ≤ 10. In this way, the ratio of the displacement amount of the conveying end of the conveying component conveying the electrode plate group to the length of the stacking area is controlled to be 2 to 10, such that at least one stacking area has been folded on the stacking platform. This facilitates stress relief of the stacking areas during the folding, reduces the bending and warping at the folding position, and improves the quality of the stacked battery.

In some embodiments, ε further satisfies the following condition: 2.1 ≤ ε ≤ 2.9. In this way, the ratio of the displacement amount of the conveying end of the conveying component conveying the electrode plate group to the length of the stacking area is further controlled to be 2.1 to 2.9, such that the folding cycles of the stacking areas on the stacking platform are reduced before the movement strategy is executed. Therefore, most of the folding processes of the electrode plate group can benefit from the movement strategy, thereby further improving the quality of the stacked battery.

According to a second aspect, the present application provides an electrode plate folding control apparatus, adopting the electrode plate folding control method according to any one of the above embodiments, where the electrode plate folding control apparatus includes: a response module, configured to determine whether the stacking areas are folded on the stacking platform; and an execution module, configured to control the conveying component to operate and control the conveying component and/or the stacking platform to move according to a signal fed back by the response module.

According to a third aspect, the present application provides an electrode plate folding apparatus, adopting the electrode plate folding control method according to any one of the above embodiments, where the electrode plate folding apparatus includes: an electrode plate folding mechanism, including the stacking platform and the conveying component configured to convey the electrode plate group and fold the electrode plate group back and forth on the stacking platform; and a driving mechanism, configured to drive the conveying component and/or the stacking platform to move.

In some embodiments, the conveying component and the stacking platform are spaced apart along the preset direction, and the driving mechanism is configured to drive at least one of the conveying component and the stacking platform to move back and forth in the preset direction. In this way, the driving mechanism is used to drive the conveying component and/or the stacking platform to reciprocate in the preset direction, such that in the folding process, the conveying component and the stacking platform are pulled apart, thereby providing an effective clearance space for the folding process of the stacking areas, facilitating stress relief of the stacking areas, reducing the degree of bending and warping of the stacking areas, and improving the quality of the stacked battery.

According to a fourth aspect, the present application provides a battery production system, where the battery production system includes the electrode plate folding apparatus as described above.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:
FIG. 1 is a first schematic flowchart of an electrode plate folding control method according to some embodiments of the present application.
FIG. 2 is a schematic structural diagram of an electrode plate group in a folding process according to some embodiments of the present application.
FIG. 3 is a schematic structural diagram of a bent part of the electrode plate group at the folding position according to some embodiments of the present application.
FIG. 4 is a schematic structural diagram of gaps at the folding positions of a stacked structure according to some embodiments of the present application.
FIG. 5 is a second schematic flowchart of an electrode plate folding control method according to some embodiments of the present application.
FIG. 6 is a schematic structural diagram of a folding process of an electrode plate group according to some embodiments of the present application, and (a) to (c) in FIG. 6 are schematic structural diagrams corresponding to different phases of the folding process of the electrode plate group according to some embodiments of the present application.
FIG. 7 is a third schematic flowchart of an electrode plate folding control method according to some embodiments of the present application.
FIG. 8 is a graph illustrating a specific movement position amplitude curve of a stacking platform according to some embodiments of the present application.
FIG. 9 is a fourth schematic flowchart of an electrode plate folding control method according to some embodiments of the present application.
FIG. 10 is a schematic structural diagram of a folding process of an electrode plate group according to some other embodiments of the present application, and (a) to (d) in FIG. 10 are schematic structural diagrams corresponding to different phases of the folding process of the electrode plate group according to some other embodiments of the present application.
FIG. 11 is a schematic structural diagram of an electrode plate group in an electrode plate folding mechanism before a movement strategy is executed according to some embodiments of the present application.
FIG. 12 is a schematic structural diagram of an electrode plate folding control apparatus according to some embodiments of the present application.

100: electrode plate folding apparatus; 10: electrode plate folding mechanism; 1a: first displacement; 1b: second displacement; 1c: third displacement; 1d: preset displacement amount; 1e: initial distance; 1f: gap; 11: conveying component; 111: first roller; 112: second roller; 113: conveying end; 12: stacking platform; 121: working surface; 20: electrode plate group; 21: stacking area; 22: first electrode plate; 23: second electrode plate; 24: separator; 25: folding position; 30: driving mechanism; X: preset direction; 200: response module; 300: execution module.

### DETAILED DESCRIPTION

To make the aforementioned objectives, features, and advantages of the present application more clear and comprehensible, embodiments of the present application will be described in detail in conjunction with the drawings below. In the following description, numerous specific details are set forth in order to provide a thorough understanding of the present application. However, the present application can be implemented in many other ways different from those described herein, and similar improvements can be made by those skilled in the art without departing from the spirit of the present application, such that the present application is not limited to the specific embodiments disclosed below.

In the description of the present application, it should be understood that if there are the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, the directional or positional relationships indicated by the terms are based on the directional or positional relationships shown in the drawings. They are merely for the convenience of describing the present application and simplifying the description, and are not intended to indicate or imply that the apparatuses or elements referred to must have specific directions or must be constructed and operated in specific directions. Therefore, these terms should not be construed as limitations on the present application.

In addition, if there are the terms "first" and "second", the terms are used for descriptive purposes only and are not to be construed as indicating or implying relative importance or to implicitly indicate the number of technical features indicated. Thus, a feature defined by "first" or "second" may explicitly or implicitly show that at least one such feature is included. In the description of the present application, if there is the term "a plurality of", unless otherwise explicitly limited, the term "a plurality of" means at least two, for example, two, three, and the like.

In the present application, unless otherwise explicitly specified or limited, if there are the terms "mount", "link" "connect", "fix", and the like, the terms should be construed in a broad sense. For example, unless otherwise explicitly limited, they may be a fixed connection, a detachable connection, or an integral connection; a mechanical connection or an electrical connection; or a direct connection, an indirect connection through an intermediate, internal communication between two elements, or interaction between two elements. For those of ordinary skill in the art, the specific meanings of the aforementioned terms in the present application can be understood according to specific conditions.

In the present application, unless otherwise explicitly specified or limited, if there is a description that a first feature is "above" or "below" a second feature and other similar descriptions, the meanings thereof may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "vertical", "horizontal", "upper", "lower", "left", "right", and similar descriptions, if present, are used herein for descriptive purposes only and do not necessarily represent the only implementation.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

In batteries, the electrode assembly, which serves as the component that undergoes an electrochemical reaction, is usually formed by stacking a positive electrode plate, a separator, and a negative electrode plate. During the stacking process, an electrode plate group formed by the stacked negative electrode plate, separator, and positive electrode plate may be folded in a zigzag configuration. For example, one stacking area of the electrode plate group is folded on the stacking platform in a rightward bending direction; after folding, another stacking area connected to the stacking area is folded in a leftward bending direction; and this process is repeated to form a Z-shaped stacked structure. Generally, for a stacked battery formed by a conventional folding method, a lithium plating problem occurs at the folding position of the electrode plate, resulting in a decrease in the quality of the stacked battery.

Based on this, to effectively solve the problem that a stacked structure formed in a conventional folding manner is prone to lithiation at the folding position, the present application provides an electrode plate folding control method. In the process of folding an electrode plate group, a conveying component is controlled to operate to drive the electrode plate group to move towards a stacking platform. When the stacking areas begin to be folded or have been folded on the stacking platform, at least one of the conveying component and the stacking platform is controlled to move such that the conveying end of the conveying component and at least a portion of the working surface of the stacking platform are pulled apart. In this way, a clearance space can be provided for the folding of the stacking areas, thereby facilitating stress relief of the stacking areas during folding, reducing the pulling force of a stacking area in a folded state on a non-folded stacking area, and reducing the degree of bending and warping of the stacking area at the folding position. Thus, the probability of abnormal gaps being generated at the folding position of a stacked structure is reduced, thereby effectively reducing the probability of lithium plating of the electrode plate at the folding position, and improving the quality of the stacked battery.

In some embodiments of the present application, the electrode assembly is a component that undergoes an electrochemical reaction in the battery and may be formed by stacking a positive electrode plate and a negative electrode plate, and a separator is generally disposed between the positive electrode plate and the negative electrode plate. The portions of the positive electrode plate and the negative electrode plate that contain the active substance constitute the body part of the electrode assembly, and the portions of the positive electrode plate and the negative electrode plate that do not contain the active substance each constitute a tab. The positive electrode tab and the negative electrode tab may be located together at one end of the body part or separately at two ends of the body part. During the charging and discharging process of the battery, the positive electrode active substance and the negative electrode active substance react with the electrolyte, and the tabs are connected to the electrode terminals to form a current circuit.

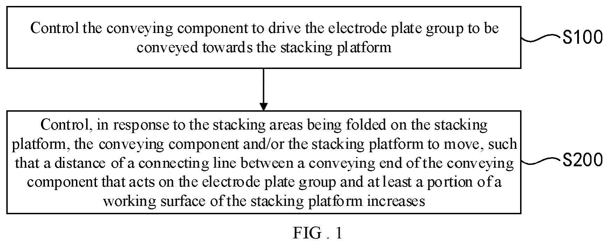

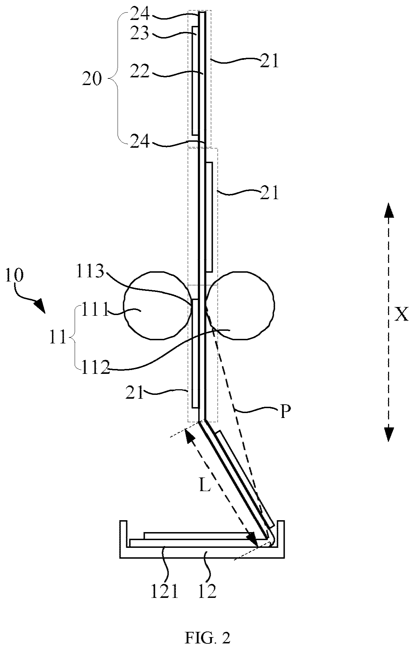

According to some embodiments of the present application, referring to FIG. 1 and FIG. 2, the present application provides an electrode plate folding control method, an electrode plate folding mechanism 10 including a stacking platform 12 and a conveying component 11 configured to convey an electrode plate group 20, where the electrode plate group 20 is provided with a plurality of stacking areas 21 along a length direction thereof. The electrode plate folding control method includes the following steps:
S100, controlling the conveying component 11 to drive the electrode plate group 20 to be conveyed towards the stacking platform 12; and
S200, controlling, in response to the stacking areas 21 being folded on the stacking platform 12, the conveying component 11 and/or the stacking platform 12 to move, such that a distance of a connecting line between a conveying end 113 of the conveying component 11 that acts on the electrode plate group 20 and at least a portion of a working surface 121 of the stacking platform 12 increases.

The electrode plate folding mechanism 10 refers to a device that can fold the electrode plate group 20 back and forth on the stacking platform 12 in a zigzag configuration. The electrode plate group 20 refers to a combined structure formed by stacking a first electrode plate 22, a separator 24, and a second electrode plate 23. To ensure that the electrode plate group 20 can be continuously folded back and forth in a zigzag configuration to form a stacked structure, the electrode plate group 20 is provided with a plurality of continuous and foldable stacking areas 21 along the length direction thereof, and a fold line is present between two adjacent stacking areas 21. The fold line may be disposed on one side surface of the electrode plate group 20, or may be disposed on two opposite side surfaces of the electrode plate group 20, that is, double-sided fold lines. Certainly, the concept of the stacking areas 21 may also be defined by the fold lines on the electrode plate group 20. For example, along the length direction of the electrode plate group 20, an area between two adjacent fold lines is the stacking area 21. In addition, it should be noted that folding the stacking area 21 is essentially folding a portion of the corresponding electrode plate group 20 in the stacking area 21. For ease of description, the folding is abbreviated as folding the stacking area 21 in the entire specification.

In order to ensure that the stacking areas 21 are folded back and forth (which may also be understood as folded left and right), the first electrode plate 22 and the separator 24 may be designed as continuous strip structures, and the second electrode plate 23 may be die-cut into structures of a required dimension which are disposed in the stacking areas 21 in a one-to-one correspondence manner. In addition, in two adjacent stacking areas 21, two second electrode plates 23 are separately located on different sides of the electrode plate group 20. The first electrode plate 22 may be the negative electrode plate, and the second electrode plate 23 may be the positive electrode plate.

The conveying component 11 refers to a device that provides conveying power for the electrode plate group 20, and may be of a roller structure. For example, the conveying component 11 may include a first roller 111 and a second roller 112 that cooperate with each other, and the electrode plate group 20 is clamped between the first roller 111 and the second roller 112. In this case, the conveying end 113 of the conveying component 11 that acts on the electrode plate group 20 may be understood as the end of the first roller 111 or the second roller 112 in contact with the electrode plate group 20. Certainly, in some embodiments, for the determination of the conveying end 113 of the conveying component 11, the intersection point between the line connecting the centers of the first roller 111 and the second roller 112 and the first roller 111 or the second roller 112 may also be considered as the conveying end 113 of the conveying component 11.

The stacking platform 12 refers to a structure configured to hold the stacked structure and provide a supporting force for the folding process. For example, in the folding process, the conveying component 11 moves the electrode plate group 20 towards the stacking platform 12, such that one end of the stacking area 21 is in contact with the working surface 121 of the stacking platform 12. As the conveying continues, one end of the stacking area 21 is gradually bent and attached to the working surface 121 by using a contact point on the working surface 121 as a folding point.

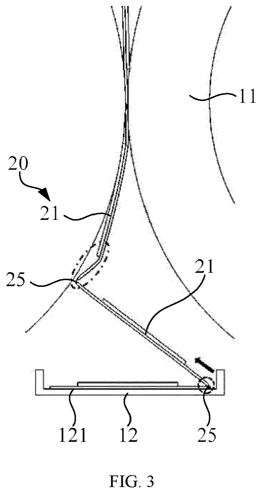

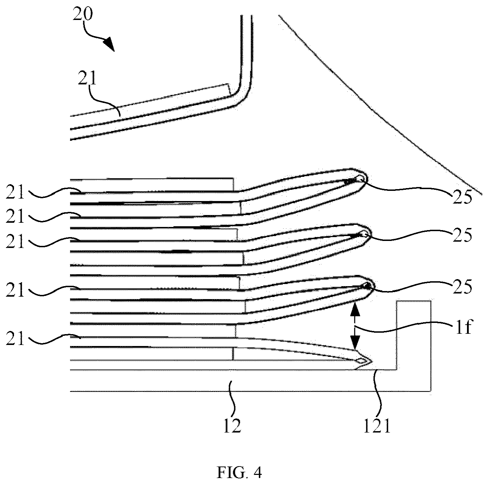

When one end of the stacking area 21 is folded by using a contact point as a folding point, the other end of the stacking area 21 is subjected to a pulling force from the stacking platform 12, causing bending and warping of one end of the adjacent stacking area 21 under the force. For example, in some embodiments, referring to FIG. 3, when a stacking area 21 is folded, the stacking area 21 is subjected to a pulling force at a folding position 25. The pulling force is transmitted through the stacking area 21 to the adjacent stacking area 21, causing an end of the stacking area 21 that is unfolded to bend. The stacked structure formed in this way may bend and warp at the bending position. Bending and warping may cause abnormal gap 1f between two adjacent folding positions 25; for example, the gap 1f is too large. Specifically, referring to FIG. 4, the wettability of the electrolyte becomes poor, and the kinetics of lithium ions is relatively weak, such that the folding positions 25 are prone to lithiation.

In this case, if the distance between at least a portion of the working surface 121 and the conveying end 113 of the conveying component 11 increases, the pulling force of the working surface 121 on the stacking area 21 is weakened, and the degree of bending and warping of the adjacent stacking area 21 that is unfolded is also reduced.

In step S200, when at least one of the conveying component 11 and the stacking platform 12 is driven to move, it can be determined whether the stacking area 21 is folding on the stacking platform 12. If no stacking area 21 is folding, one end of the stacking area 21 will not be bent, so it is unnecessary to drive the conveying component 11 and/or the stacking platform 12 to move.

To reduce the degree of bending and warping of the stacking area 21 at the folding position 25, the conveying component 11 or the stacking platform 12 moves in a plurality of manners. For example, the conveying component 11 or the stacking platform 12 reciprocates up and down; or the conveying component 11 or the stacking platform 12 rotates around an axis thereof; or the conveying component 11 or the stacking platform 12 translates left and right, and so on. Certainly, the two components may also move at the same time, but their respective movement modes may be different. For example, the conveying component 11 can move up and down, and the stacking platform 12 can translate left and right, and so on.

In addition, the case that the distance of the connecting line between the conveying end 113 of the conveying component 11 and at least a portion of the working surface 121 of the stacking platform 12 increases may be understood as that: the distance of the connecting line between the conveying end 113 of the conveying component 11 and at least a portion of the working surface 121 increases. For example, when the stacking platform 12 moves up and down, the distance between the conveying end 113 of the conveying component 11 and any point of the working surface 121 of the stacking platform 12 increases; and when the stacking platform 12 rotates around its own axis, the distance between the conveying end 113 of the conveying component 11 and the axis of the stacking platform 12 remains unchanged, but the distance between the conveying end 113 and a portion outside the axis may increase, and so on.

It should be noted that in the embodiments of the present application, "the increase in the distance of the connecting line" does not mean that the distance of the connecting line increases all the time during the movement of the conveying component 11 or the stacking platform 12, but that the distance of the connecting line between the conveying end 113 of the conveying component 11 and at least a portion of the working surface 121 of the stacking platform 12 will increase in a period of time during the movement of the conveying component 11 or the stacking platform 12. For example, as the conveying component 11 or the stacking platform 12 moves, the distance of the connecting line between the conveying end 113 of the conveying component 11 and at least a portion of the working surface 121 of the stacking platform 12 may periodically follow a rule of first increase and then decrease. For ease of understanding, the distance of the connecting line can refer to the distance represented by P in FIG. 2.

In this design, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

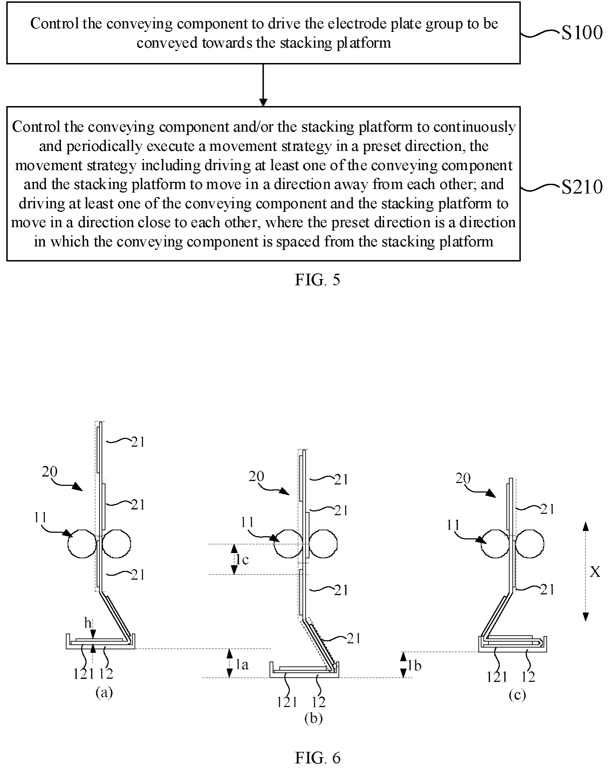

According to some embodiments of the present application, referring to FIG. 5, the step S200 of controlling the conveying component 11 and/or the stacking platform 12 to move includes:
S210, controlling the conveying component 11 and/or the stacking platform 12 to continuously and periodically execute a movement strategy in a preset direction X, the movement strategy including driving at least one of the conveying component 11 and the stacking platform 12 to move in a direction away from each other; and driving at least one of the conveying component 11 and the stacking platform 12 to move in a direction close to each other, where the preset direction X is a direction in which the conveying component 11 is spaced from the stacking platform 12.

Continuously and periodically executing the movement strategy means that when the conveying component 11 or the stacking platform 12 completes one movement strategy, then another movement strategy is executed, and so on.

The movement strategy means that in one cycle, the conveying component 11 or the stacking platform 12 first moves in the direction away from each other and then moves in the direction close to each other in the preset direction X. The expression "away from each other" means that the conveying component 11 and the stacking platform 12 move away from each other, and the expression "close to each other" means that the conveying component 11 and the stacking platform 12 move close to each other.

It should be explained that controlling "the conveying component 11 and/or the stacking platform 12" to execute the movement strategy may be understood as that: if one of the conveying component 11 and the stacking platform 12 executes the movement strategy, then the first and second recitations of "at least one of the conveying component 11 and the stacking platform 12" in the movement strategy both refer to the conveying component 11 or the stacking platform 12. If both the conveying component 11 and the stacking platform 12 participate in executing the movement strategy, the first and second recitations of "at least one of the conveying component 11 and the stacking platform 12" in the movement strategy may be both the conveying component 11 and the stacking platform 12, or may be either the conveying component 11 or the stacking platform 12. For example, in the same movement strategy, after the conveying component 11 moves in the direction away from each other, the stacking platform 12 can move in the direction close to each other; or after the stacking platform 12 moves in the direction away from each other, the conveying component 11 can move in the direction close to each other, and so on.

When the stacking areas 21 are folded on the stacking platform 12, referring to FIG. 6, (a) in FIG. 6 is a schematic structural diagram corresponding to the case that the stacking platform does not execute a movement strategy in the folding process of the electrode plate group according to some embodiments of the present application; (b) in FIG. 6 is a schematic structural diagram corresponding to the case that the stacking platform moves downward by a first displacement in the folding process of the electrode plate group according to some embodiments of the present application; and (c) in FIG. 6 is a schematic structural diagram corresponding to the case that the stacking platform moves upward by a second displacement in the folding process of the electrode plate group according to some embodiments of the present application. The conveying component 11 or the stacking platform 12 is first driven to move in the preset direction X such that the conveying component 11 and the stacking platform 12 are pulled apart, thus providing a clearance space for folding the stacking area 21. This facilitates pulling force relief of the stacking area 21 and reduces the degree of bending and warping of one end of the stacking area 21. Then, the conveying component 11 or the stacking platform 12 is driven to move in an opposite direction, i.e., in the direction close to each other, such that the stacking area 21 is completely folded on the stacking platform 12.

To further improve the folding effect, the execution timing of the movement strategy may be determined when the stacking area 21 just starts to be folded on the stacking platform 12, or it can be understood that the folding action of the previous stacking area 21 is just completed. At the same time, the end timing of the movement strategy may also be determined when the stacking area 21 is completely folded on the stacking platform 12.

In this design, in the process of folding the electrode plate group 20, at least one of the conveying component 11 and the stacking platform 12 is controlled to periodically execute the movement strategy, to provide effective clearance space for the folding process of the stacking areas 21, which facilitates stress relief of the stacking areas 21, reduces the degree of bending and warping of the stacking areas 21, and improves the quality of the stacked battery.

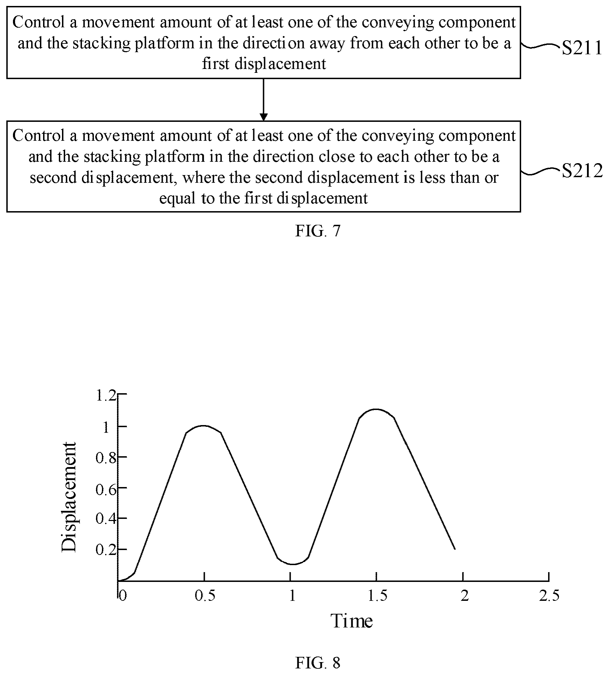

According to some embodiments of the present application, referring to FIG. 7, in the step S210 of executing the movement strategy, the method includes:
S211, controlling a movement amount of at least one of the conveying component 11 and the stacking platform 12 in the direction away from each other to be a first displacement 1a; and
S212, controlling a movement amount of at least one of the conveying component 11 and the stacking platform 12 in the direction close to each other as a second displacement 1b, where the second displacement 1b is less than or equal to the first displacement 1a.

When the second displacement 1b is less than the first displacement 1a, it indicates that the conveying component 11 or the stacking platform 12 is not at the same position after each time the conveying component 11 or the stacking platform 12 executes the movement strategy. For ease of understanding, FIG. 6 is taken as an example for description. The stacking platform 12 is controlled to periodically execute the movement strategy, and the stacking platform 12 is located below the conveying component 11. In the folding process, the position of the stacking platform 12 first descends from the first position to the second position, and then ascends from the second position to the third position. In this case, the third position is lower than the original first position. In this cycle, each time the movement strategy is executed, the position of the stacking platform 12 gradually descends.

For ease of intuitively understanding the movement trajectory of the stacking platform 12, the value of the first displacement 1a may be assigned to 1. In this case, the specific movement position amplitude curve of the stacking platform 12 can refer to FIG. 8. It is considered that as the folding continues, the number of the stacking areas 21 that are folded on the stacking platform 12 increases, and the distance between the stacking platform 12 and the conveying component 11 decreases accordingly. In this way, the folding space of the stacking areas 21 is gradually reduced. Therefore, in this embodiment, the second displacement 1b is controlled to be less than the first displacement 1a, such that the distance between the conveying component 11 and the stacking platform 12 can be increased to partially or completely compensate for the reduced space between the conveying component 11 and the stacking platform 12 due to the increased folding thickness, thereby enabling the folding process to run stably.

When the second displacement 1b is equal to the first displacement 1a, it indicates that the conveying component 11 or the stacking platform 12 is at the same position after each time the conveying component 11 or the stacking platform 12 executes the movement strategy. In order to deal with the situation that the folding space between the conveying component 11 and the stacking platform 12 is reduced due to the increase in the number of the stacking areas 21 that are folded, after the conveying component 11 or the stacking platform 12 is enabled to execute the movement strategy, the conveying component 11 or the stacking platform 12 can be controlled to move as a whole to increase the space therebetween.

It should be noted that controlling the movement amount of at least one of the conveying component 11 and the stacking platform 12 in the direction away from each other to be the first displacement 1a means that: if one of the conveying component 11 and the stacking platform 12 is controlled to move in the direction away from each other, the movement amount of the conveying component 11 or the stacking platform 12 is the first displacement 1a; and if both the conveying component 11 and the stacking platform 12 are controlled to move in the direction away from each other, the sum of the movement amounts of the conveying component 11 and the stacking platform 12 is the first displacement 1a.

Similarly, controlling the movement amount of at least one of the conveying component 11 and the stacking platform 12 in the direction close to each other to be the second displacement 1b should be understood as that: if one of the conveying component 11 and the stacking platform 12 is controlled to move in the direction close to each other, the movement amount of the conveying component 11 or the stacking platform 12 is the second displacement 1b; and if both the conveying component 11 and the stacking platform 12 are controlled to move in the direction close to each other, the sum of the movement amounts of the conveying component 11 and the stacking platform 12 is the second displacement 1b.

During the execution of the movement strategy, the movement amount of the conveying component 11 or the stacking platform 12 in the direction close to each other is controlled to be at least not greater than the movement amount of the conveying component 11 or the stacking platform 12 in the direction away from each other. On the premise of reducing the bending degree of the electrode plate group 20 at the folding position 25, the distance between the conveying component 11 and the stacking platform 12 remains unchanged or increases, which facilitates the folding and stable operation of the electrode plate group 20 to a certain extent.

According to some embodiments of the present application, referring to FIG. 6, the first displacement 1a is greater than the second displacement 1b, and the difference value therebetween is denoted as Δ_{W}; and the thickness of the electrode plate group 20 in the stacking areas 21 is denoted as h, where 1 ≤ Δ_{W/h} ≤ 5.

The first displacement 1a is greater than the second displacement 1b, which indicates that the positions of the conveying component 11 or the stacking platform 12 are different after one movement strategy is executed. In addition, the distance between the conveying component 11 and the stacking platform 12 increases as the number of times of executing the movement strategy increases, which can effectively solve the problem that the space between the conveying component 11 and the stacking platform 12 is reduced due to increased folding cycles.

The thickness of the electrode plate group 20 in the stacking areas 21 refers to the sum of the thicknesses of the first electrode plate 22, the second electrode plate 23, and the separator 24 in the stacking areas 21. The thickness of the electrode plate group 20 in the stacking areas 21 may be determined based on the actual structural design of the stacking areas 21. For example, in the stacking areas 21, the electrode plate group 20 may include a first electrode plate 22, separators 24 disposed on two opposite side surfaces of the first electrode plate 22, and a second electrode plate 23 disposed on one of the separators 24. In this case, the thickness of the electrode plate group 20 in the stacking areas 21 may be the sum of the thicknesses of the first electrode plate 22, the second electrode plate 23, and the two separators 24.

Δ_{W/h} may have a value of 1 to 5. For example, the value of Δ_{W/h} may be, but is not limited to, 1, 2, 3, 4, 5, or the like.

In addition, when the value of Δ_{W/h} is 1, it indicates that the position of the conveying component 11 or the stacking platform 12 after executing the movement strategy is moved relatively backward by the thickness of one electrode plate group 20. If one stacking area 21 is just stacked on the stacking platform 12 after the movement strategy is executed, it can compensate for the reduced space between the stacking platform 12 and the conveying component 11 due to the stacking of the stacking areas 21 on the stacking platform 12. Similarly, when the value of Δ_{W/h} is n (n may be 2 to 5), it indicates that the position of the conveying component 11 or the stacking platform 12 after executing the movement strategy is moved relatively backward by the thickness of n electrode plate groups 20.

The value of Δ_{W/h} is controlled to be 1 to 5, such that after each folding, enough space is maintained between the conveying component 11 and the stacking platform 12, which facilitates stable folding of the electrode plate group 20 on the stacking platform 12 and improves the stability of the folding process.

According to some embodiments of the present application, Δ_{W/h} further satisfies the following condition: 2 ≤ Δ W/h < 3.

Δ_{W/h} may have a value of 2 to 3. For example, the value of Δ_{W/h} may be, but is not limited to, 2, 2.2, 2.4, 2.6, 2.8, 3, or the like.

The value of Δ_{W/h} is further controlled to be 2 to 3, such that after each folding, the space between the conveying component 11 and the stacking platform 12 is more reasonably controlled, thereby enabling the folding process of the electrode plate group 20 on the stacking platform 12 to be more stable.

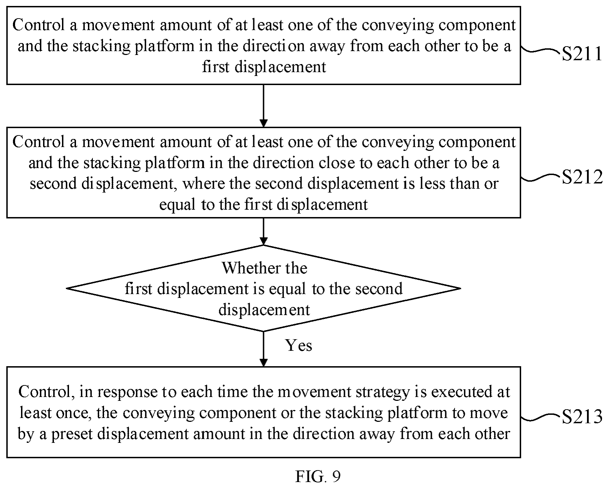

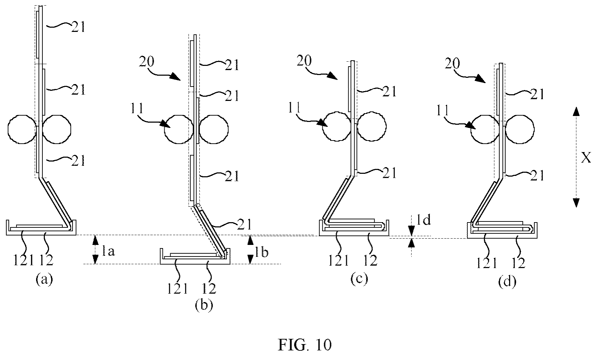

According to some embodiments of the present application, referring to FIG. 9 and FIG. 10, (a) in FIG. 10 is a schematic structural diagram corresponding to the case that the stacking platform does not execute a movement strategy in the folding process of the electrode plate group according to some other embodiments of the present application; (b) in FIG. 10 is a schematic structural diagram corresponding to the case that the stacking platform moves downward by a first displacement in the folding process of the electrode plate group according to some other embodiments of the present application; (c) in FIG. 10 is a schematic structural diagram corresponding to the case that the stacking platform moves upward by a second displacement in the folding process of the electrode plate group according to some other embodiments of the present application; and (d) in FIG. 10 is a schematic structural diagram corresponding to the case that the stacking platform moves downward by a preset displacement amount in the folding process of the electrode plate group according to some other embodiments of the present application. After the step S212 of controlling the movement amount of at least one of the conveying component 11 and the stacking platform 12 in the direction close to each other to be the second displacement 1b, the method includes:
S213, controlling, in response to each time executing the movement strategy at least once, the conveying component 11 and/or the stacking platform 12 to move by a preset displacement amount 1d in the direction away from each other if the first displacement 1a is equal to the second displacement 1b.

The first displacement 1a is equal to the second displacement 1b, which indicates that the position of the conveying component 11 or the stacking platform 12 remains unchanged after each time the movement strategy is executed. However, as the folding cycles increase, the stacking areas 21 that are stacked on the stacking platform 12 will enable the space between the stacking platform 12 and the conveying component 11 to be reduced, which brings inconvenience to the folding of the electrode plate group 20 on the stacking platform 12. Meanwhile, stress relief of the stacking areas 21 in the folding process is also affected.

For this reason, each time the conveying component 11 or the stacking platform 12 executes the movement strategy at least once, the conveying component 11 or the stacking platform 12 is controlled to move as a whole in the direction away from each other. Each time the conveying component 11 or the stacking platform 12 completes the execution once, the conveying component 11 or the stacking platform 12 moves in the direction away from each other, or each time the conveying component 11 or the stacking platform 12 completes the execution multiple times, the conveying component 11 or the stacking platform 12 moves in the direction away from each other, and so on. Specifically, in some embodiments, each time the conveying component 11 or the stacking platform 12 executes the movement strategy once, the conveying component 11 or the stacking platform 12 is controlled to move in the direction away from each other.

It should be noted that controlling the conveying component 11 and/or the stacking platform 12 to move by the preset displacement amount 1d in the direction away from each other means that: if one of the conveying component 11 and the stacking platform 12 is controlled to move in the direction away from each other, the movement amount of the conveying component 11 or the stacking platform 12 is the preset displacement amount 1d; and if both the conveying component 11 and the stacking platform 12 are controlled to move in the direction away from each other, the sum of the movement amounts of the conveying component 11 and the stacking platform 12 is the preset displacement amount 1d.

In this design, the configuration can effectively compensate for space reduction due to increased folding cycles, facilitating the folding of the electrode plate group 20. Simultaneously, it promotes the stress relief of the electrode plate group 20 during the folding process, improving the quality of the stacked battery.

According to some embodiments of the present application, referring to FIG. 10, a ratio of the preset displacement amount 1d to the thickness of the electrode plate group 20 in the stacking areas 21 is denoted as α, where 1 ≤ α ≤ 5.

α may have a value of 1 to 5; for example, α may be, but is not limited to, 1, 1.2, 1.5, 2.0, 2.5, 3, 4, 5, or the like. When α is set to 1, the conveying component 11 or the stacking platform 12 moves by the thickness of one electrode plate group 20 in the direction away from each other. When α is set to 5, the conveying component 11 or the stacking platform 12 moves by the thicknesses of five electrode plate groups 20 in the direction away from each other.

The ratio of the preset displacement amount 1d to the thickness of the electrode plate group 20 in the stacking areas 21 is controlled to be 1 to 5, such that the conveying component 11 or the stacking platform 12 retracts by an appropriate displacement amount after folding. This leaves a proper space for the electrode plate group 20 between the conveying component 11 and the stacking platform 12, thereby implementing a stable and effective folding process.

According to some embodiments of the present application, α further satisfies the following condition: 2 ≤ α ≤ 3.

α may have a value of 2 to 3. For example, the value of a may be, but is not limited to, 2, 2.2, 2.4, 2.6, 2.8, 3, or the like.

The value of α is further controlled to be 2 to 3, such that after each folding, the space between the conveying component 11 and the stacking platform 12 is more reasonably controlled, thereby enabling the folding process of the electrode plate group 20 on the stacking platform 12 more stable.

According to some embodiments of the present application, referring to FIG. 6, when at least one of the conveying component 11 and the stacking platform 12 moves by the first displacement 1a in the direction away from each other, a displacement amount of the conveying end 113 of the conveying component 11 conveying the electrode plate group 20 in the direction facing the stacking platform 12 is controlled to be a third displacement 1c, where the third displacement 1c is greater than the first displacement 1a.

It is not difficult to understand that since the conveying component 11 is in an operating state all the time during the folding process, when the conveying component 11 or the stacking platform 12 moves in the direction away from each other, the conveying end 113 of the conveying component 11 also drives the electrode plate group 20 to be conveyed towards one side of the stacking platform 12. In this case, when the conveying component 11 or the stacking platform 12 moves by the first displacement 1a in the direction away from each other, the conveying amount of the electrode plate group 20 is correspondingly the third displacement 1c.

In addition, because the third displacement 1c is greater than the first displacement 1a, an amount by which the conveying component 11 or the stacking platform 12 moves backward does not completely cancel out the conveying amount of the electrode plate group 20 towards one side of the stacking platform 12. In this way, an extra conveying amount drives the stacking areas 21 to continue to be folded on the stacking platform 12. Certainly, in order to achieve the above effects, the conveying speed of the conveying component 11 can be controlled, such as the linear speed of the roller shaft, to be greater than the moving speed of the conveying component 11 or the stacking platform 12 in the direction away from each other.

In addition, in some embodiments, when the conveying component 11 or the stacking platform 12 starts to execute the first phase of the movement strategy, that is, the conveying component 11 or the stacking platform 12 starts to move in the direction away from each other, one of the stacking areas 21 may be controlled to initiate folding or maintain folding within the initial stage on the stacking platform 12, and so on.

The third displacement 1c is controlled to be greater than the first displacement 1a, such that an excessive conveying amount can drive the stacking areas 21 to continue to be folded on the stacking platform 12. Therefore, when the space between the conveying component 11 and the stacking platform 12 increases to release stress, the electrode plate group 20 can stably continue to be folded.

According to some embodiments of the present application, a ratio of the third displacement 1c to the length of the stacking area 21 is denoted as η, where 0.3 ≤ η ≤ 0.7.

A proper value of the third displacement 1c can ensure that when the conveying component 11 or the stacking platform 12 moves in the direction away from each other, the corresponding stacking area 21 on the stacking platform 12 is in the process of folding. In this way, during the folding process of the stacking areas 21, the action that the conveying component 11 or the stacking platform 12 moves in the direction away from each other can be effectively used to release the stress and reduce the degree of bending and warping of the electrode plate group 20 at the folding position 25.

η may have a value of 0.3 to 0.7; for example, η may be, but is not limited to, 0.3, 0.4, 0.5, 0.6, 0.7, or the like. When η is 0.5, it indicates that the conveying component 11 conveys half of the stacking areas 21 of the electrode plate group 20. If, for example, executing the movement strategy once corresponds to the conveying component 11 conveying one stacking area 21, during the process of executing the movement strategy, after executing the first phase of the movement strategy, the conveying component 11 correspondingly conveys half of the stacking areas 21; and after executing the second phase of the movement strategy, the conveying component 11 correspondingly conveys the other half of the stacking areas 21. The first phase is to drive the conveying component 11 and/or the stacking platform 12 to move in the direction away from each other, and the second phase is to drive the conveying component 11 and/or the stacking platform 12 to move in the direction close to each other.

For ease of understanding the length of the stacking area 21, FIG. 2 is taken as an example, and the length of the stacking area 21 may be a dimension represented by L in FIG. 2.

The ratio of the third displacement 1c to the length of the stacking area 21 is controlled to be 0.3 to 0.7, such that at least 0.3 of the stacking areas 21 in the electrode plate group 20 are conveyed when the conveying component 11 or the stacking platform 12 completes the first phase of the movement strategy. This helps reduce the bending and warping of the electrode plate group 20 at the folding position 25, thereby improving the quality of the stacked battery.

According to some embodiments of the present application, η further satisfies the following condition: 0.45 ≤ η ≤ 0.55.

η may have a value of 0.45 to 0.55; for example, η may be, but is not limited to, 0.45, 0.46, 0.47, 0.48, 0.49, 0.50, 0.51, 0.52, 0.53, 0.54, 0.55, or the like.

The ratio of the third displacement 1c to the length of the stacking area 21 is further controlled to be 0.45 to 0.55, which is beneficial to further effectively controlling the folding process of the electrode plate group 20, thereby making the quality of the stacked battery better controllable.

According to some embodiments of the present application, a ratio of the first displacement 1a to the length of the stacking area 21 is denoted as λ, where 0.1 ≤ λ ≤ 0.6.

The value of the ratio of the first displacement 1a to the length of the stacking area 21 may be controlled to be 0.1 to 0.6. If the value is too small, an increased distance between the conveying component 11 and the stacking platform 12 is insufficient to release stress on the stacking area 21, resulting in a relatively large bending degree of the folding position 25; and if the value is too large, the distance between the conveying component 11 and the stacking platform 12 is too large, thus affecting the folding efficiency of the electrode plate group 20 on the stacking platform 12.

Therefore, the value of the ratio of the first displacement 1a to the length of the stacking area 21 may be, but is not limited to, 0.1, 0.2, 0.3, 0.4, 0.5, 0.6, or the like. Certainly, the value of λ should also be less than the value of η.

In this design, the value of the ratio of the first displacement 1a to the length of the stacking area 21 is controlled to be 0.1 to 0.6, such that both stress relief in the folding process and the folding efficiency can be effectively considered.

According to some embodiments of the present application, λ further satisfies the following condition: 0.4 ≤ λ ≤ 0.5.

The value of the ratio of the first displacement 1a to the length of the stacking area 21 may be controlled to be 0.4 to 0.5; for example, λ may be, but is not limited to, 0.4, 0.42, 0.44, 0.46, 0.48, 0.5, or the like.

The value of the ratio of the first displacement 1a to the length of the stacking area 21 is further controlled to be 0.4 to 0.5, such that the folding process of the electrode plate group 20 can be more accurately controlled.

According to some embodiments of the present application, after the conveying component 11 and/or the stacking platform 12 executes the movement strategy, the displacement amount of the conveying end 113 of the conveying component 11 conveying the electrode plate group 20 in the direction facing the stacking platform 12 is the length of at least one of the stacking areas 21.

After the conveying component 11 and/or the stacking platform 12 executes the movement strategy, the conveying component 11 may convey one stacking area 21, or may convey two or more stacking areas 21. Specifically, in some embodiments, when the conveying component 11 and/or the stacking platform 12 executes the movement strategy, the displacement amount of the conveying end 113 of the conveying component 11 conveying the electrode plate group 20 in the direction facing the stacking platform 12 is the length of one of the stacking areas 21.

In this way, the period of the movement strategy is associated with the conveying period of the conveying component 11, such that the folding quality of the electrode plate group 20 is more controllable, and the consistency of the product is better.

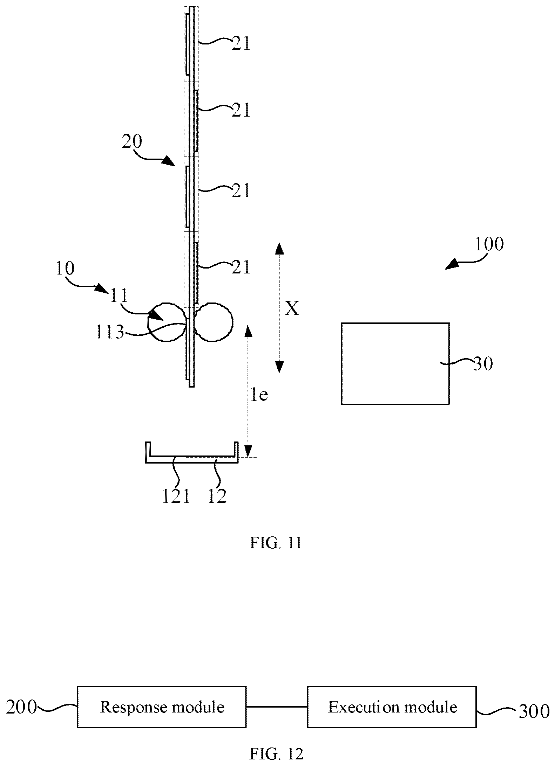

According to some embodiments of the present application, referring to FIG. 11, before the step S200 of controlling the conveying component 11 and/or the stacking platform 12 to move, the method further includes:

controlling a minimum distance between the conveying end 113 of the conveying component 11 and a working surface 121 of the stacking platform 12 to be an initial distance 1e, where a ratio of the initial distance 1e to the length of the stacking area 21 is denoted as γ, where 1.2 ≤ γ ≤ 2.

The minimum distance between the conveying end 113 and the working surface 121 is a vertical line drawn by the conveying end 113 to the working surface 121, and the length of the obtained vertical line segment is the initial distance 1e. For details, refer to the distance represented by 1e in FIG. 11.

The setting of the initial distance 1e may affect the folding effect of the electrode plate group 20 on the stacking platform 12. For example, if the initial distance 1e is less than the length of one stacking area 21, a portion of the same stacking area 21 is still located on the conveying component 11, and the other portion thereof has been folded on the stacking platform 12. As a result, it is more difficult to release stress on the stacking area 21, and zigzag folding cannot be properly executed. If the initial distance 1e is too large, two or more stacking areas 21 may be suspended between the conveying component 11 and the stacking platform 12. As a result, the situation that the folding direction is disordered easily occurs during zigzag folding; and meanwhile, the folding efficiency is also reduced.

Therefore, the ratio of the initial distance 1e to the length of the stacking area 21 is controlled to be 1.2 to 2; for example, γ may be, but is not limited to, 1.2, 1.3, 1.4, 1.5, 1.6, 1.7, 1.8, 1.9, 2, or the like.

In this design, the ratio of the initial distance 1e to the length of the stacking area 21 is controlled to be 1.2 to 2, such that a cantilevered stacking area 21 is provided between the conveying component 11 and the stacking platform 12, the folding process can be stably performed, and meanwhile, the folding efficiency is improved.

According to some embodiments of the present application, γ further satisfies the following condition: 1.3 ≤ γ ≤ 1.6.

The ratio of the initial distance 1e to the length of the stacking area 21 is controlled to be 1.3 to 1.6; for example, γ may be, but is not limited to, 1.3, 1.35, 1.4, 1.45, 1.5, 1.55, 1.6, or the like.

In this way, the ratio of the initial distance 1e to the length of the stacking area 21 is further controlled to be 1.3 to 1.6, such that the folding of the electrode plate group 20 can be more accurately controlled, thereby further improving the stability and the folding efficiency in the folding process.

According to some embodiments of the present application, in response to the step of the stacking areas 21 being folded on the stacking platform 12, the method includes: controlling the displacement amount of the conveying end 113 of the conveying component 11 conveying the electrode plate group 20 in the direction facing the stacking platform 12 to be a fourth displacement, where a ratio of the fourth displacement to the length of the stacking area 21 is denoted as ε, where 2 ≤ ε ≤ 10.

The displacement amount of the conveying end 113 of the conveying component 11 conveying the electrode plate group 20 in the direction facing the stacking platform 12 may also be understood as the displacement of the electrode plate group 20 moving towards the stacking platform 12 under the action of the conveying component 11. On the premise that the initial distance 1e is controlled to be 1.2 to 2, the ratio of the displacement amount of the conveying end 113 of the conveying component 11 conveying the electrode plate group 20 to the length of the stacking area 21 is controlled to be 2 to 10, such that at least one stacking area 21 has been folded or starts to be folded on the stacking platform 12. For example, ε may be, but is not limited to, 2, 3, 4, 5, 6, 7, 8, 9, 10, or the like.

In this design, the ratio of the displacement amount of the conveying end 113 of the conveying component 11 conveying the electrode plate group 20 to the length of the stacking area 21 is controlled to be 2 to 10, such that at least one stacking area 21 has been folded on the stacking platform 12. This facilitates stress relief of the stacking areas 21 during the folding, reduces the bending and warping at the folding position 25, and improves the quality of the stacked battery.

According to some embodiments of the present application, ε further satisfies the following condition: 2.1 ≤ ε ≤ 2.9.

On the premise that the initial distance 1e is controlled to be 1.2 to 2, the ratio of the displacement amount of the conveying end 113 of the conveying component 11 conveying the electrode plate group 20 to the length of the stacking area 21 is controlled to be 2.1 to 2.9, such that the folding cycles of the stacking areas 21 on the stacking platform 12 are reduced before the movement strategy is executed.

The ratio ε of the displacement amount of the conveying end 113 of the conveying component 11 conveying the electrode plate group 20 to the length of the stacking area 21 may be controlled to be 2.1 to 2.9. For example, ε may be, but is not limited to, 2.1, 2.2, 2.3, 2.4, 2.5, 2.6, 2.7, 2.8, 2.9, or the like.

The ratio of the displacement amount of the conveying end 113 of the conveying component 11 conveying the electrode plate group 20 to the length of the stacking area 21 is further controlled to be 2.1 to 2.9, such that the folding cycles of the stacking areas 21 on the stacking platform 12 are reduced before the movement strategy is executed. Therefore, most of the folding processes of the electrode plate group 20 can benefit from the movement strategy, thereby further improving the quality of the stacked battery.

According to some embodiments of the present application, referring to FIG. 12, the present application provides an electrode plate folding control apparatus, which adopts the electrode plate folding control method according to any one of the above embodiments. The electrode plate folding control apparatus includes a response module 200 and an execution module 300. The response module 200 is configured to determine whether the stacking area 21 is folded on the stacking platform 12, and the execution module 300 is configured to control the conveying component 11 to operate and control the conveying component 11 and/or the stacking platform 12 to move according to a signal fed back by the response module 200.

The response module 200 refers to a device that can acquire the execution timing of movement of the conveying component 11 or the stacking platform 12. For example, the response module 200 may be selected as a displacement sensing module to acquire the conveying displacement of the electrode plate group 20 by the conveying component 11. For example, if the acquired conveying displacement is 2.1 to 2.9, a signal is fed back to the execution module 300; alternatively, the response module 200 may be a vision module, such as a CCD, and when folding action information on the stacking platform 12 is acquired, a signal is fed back to the execution module 300.

The execution module 300 refers to a device that can control the operation of the conveying component 11 and control the movement of the conveying component 11 or the stacking platform 12; for example, it may be a single-chip microcomputer, an electronic control unit, or the like.

The above electrode plate folding control apparatus adopts the above electrode plate folding control method, and uses the response module 200 to provide the determination timing for the execution module 300 to control the movement of the conveying component 11 or the stacking platform 12. In this way, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

According to some embodiments of the present application, referring to FIG. 11, the present application provides an electrode plate folding apparatus 100, which adopts the electrode plate folding control method according to any one of the above embodiments. The electrode plate folding apparatus 100 includes an electrode plate folding mechanism 10 and a driving mechanism 30. The electrode plate folding mechanism 10 includes the stacking platform 12 and the conveying component 11 configured to convey the electrode plate group 20 and fold the electrode plate group 20 back and forth on the stacking platform 12. The driving mechanism 30 is configured to drive the conveying component 11 and/or the stacking platform 12 to move.

The electrode plate folding mechanism 10 refers to a device that can fold the electrode plate group 20 back and forth on the stacking platform 12 in a zigzag configuration. The electrode plate group 20 refers to a combined structure formed by stacking a first electrode plate 22, a separator 24, and a second electrode plate 23. To ensure that the electrode plate group 20 can be continuously folded back and forth in a zigzag configuration to form a stacked structure, the electrode plate group 20 is provided with a plurality of continuous and foldable stacking areas 21 along the length direction thereof, and a fold line is present between two adjacent stacking areas 21. The fold line may be disposed on one side surface of the electrode plate group 20, or may be disposed on two opposite side surfaces of the electrode plate group 20, that is, double-sided fold lines.

The conveying component 11 refers to a device that provides conveying power for the electrode plate group 20, and may be of a roller structure. For example, the conveying component 11 may include a first roller 111 and a second roller 112 that cooperate with each other, and the electrode plate group 20 is clamped between the first roller 111 and the second roller 112. In this case, the conveying end 113 of the conveying component 11 that acts on the electrode plate group 20 may be understood as the end of the first roller 111 or the second roller 112 in contact with the electrode plate group 20. Certainly, in some embodiments, for the determination of the conveying end 113 of the conveying component 11, the intersection point between the line connecting the centers of the first roller 111 and the second roller 112 and the first roller 111 or the second roller 112 may also be considered as the conveying end 113 of the conveying component 11. One of the first roller 111 and the second roller 112 may be a driving roller, and the other may be a driven roller. Certainly, both the first roller 111 and the second roller 112 may be driving rollers.

The stacking platform 12 refers to a structure configured to hold the stacked structure and provide a supporting force for the folding process. For example, in the folding process, the conveying component 11 moves the electrode plate group 20 towards the stacking platform 12, such that one end of the stacking area 21 is in contact with the working surface 121 of the stacking platform 12. As the conveying continues, one end of the stacking area 21 is gradually bent and attached to the working surface 121 by using a contact point on the working surface 121 as a folding point.

The driving mechanism 30 refers to a device that supplies power for the movement of the conveying component 11 or the stacking platform 12; for example, it may be, but is not limited to, an air cylinder, a hydraulic cylinder, an electric cylinder, or the like. Certainly, the driving mechanism 30 may also be a combination structure of an electric motor and a transmission mechanism, such as a combination of an electric motor and a lead screw mechanism, or a combination of an electric motor and a gear and rack.

In addition, it should be noted that the electrode plate folding apparatus 100 in the present application may also adopt the electrode plate folding control method according to any one of the above embodiments.

In the above electrode plate folding apparatus 100, in the folding process of the electrode plate group 20, the conveying component 11 drives the electrode plate group 20 to move towards the stacking platform 12. When the stacking area 21 starts to be folded or has already folded on the stacking platform 12, at least one of the conveying component 11 and the stacking platform 12 is driven to move by the driving mechanism 30, such that the conveying end 113 of the conveying component 11 and at least a portion of the working surface 121 of the stacking platform 12 are pulled apart. In this way, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

According to some embodiments of the present application, the conveying component 11 and the stacking platform 12 are spaced apart along the preset direction X. The driving mechanism 30 is configured to drive at least one of the conveying component 11 and the stacking platform 12 to move back and forth in the preset direction X.

The case that the driving mechanism 30 is configured to drive at least one of the conveying component 11 and the stacking platform 12 to move back and forth in the preset direction X may be understood as that: the driving mechanism 30 can drive the conveying component 11 and/or the stacking platform 12 to move in the direction away from each other or close to each other in the preset direction X.

When the stacking area 21 is folded on the stacking platform 12, the conveying component 11 or the stacking platform 12 is first driven to move in the preset direction X such that the conveying component 11 and the stacking platform 12 are pulled apart, thus providing a clearance space for folding the stacking area 21. This facilitates pulling force relief of the stacking area 21 and reduces the degree of bending and warping of one end of the stacking area 21. Then, the conveying component 11 or the stacking platform 12 is driven to move in an opposite direction, i.e., in the direction close to each other, such that the stacking area 21 is completely folded on the stacking platform 12.

In this way, the driving mechanism 30 is used to drive the conveying component 11 and/or the stacking platform 12 to reciprocate in the preset direction X, such that in the folding process, the conveying component 11 and the stacking platform 12 are pulled apart, thereby providing an effective clearance space for the folding process of the stacking areas 21, facilitating stress relief of the stacking areas 21, reducing the degree of bending and warping of the stacking areas 21, and improving the quality of the stacked battery.

According to some embodiments of the present application, the present application provides a battery production system. The battery production system includes the electrode plate folding apparatus 100 as described above.

According to some embodiments of the present application, referring to FIG. 1 to FIG. 12, the present application provides an electrode plate folding control method. In the folding process, an electrode plate group 20 starts to be transported to two rollers. In this case, the stacking platform 12 does not move, and the two rollers continuously rotate relative to each other to transport the electrode plate group 20 downward. The initial distance 1e between the two rollers and the stacking platform 12 is about 1.2 to 2 stacking areas 21 in length. After the two rollers convey 2.1 to 2.9 stacking areas 21 downward, the stacking platform 12 starts to move downward at the same time, such that the distance between the two rollers and the stacking platform 12 increases, and thus a clearance space is generated. This alleviates the bending of the electrode plate at an outlet of the two rollers and reduces the pulling force at a corner. Subsequently, after the two rollers continue to convey 0.3 to 0.7 of the stacking areas 21 in length, the stacking platform 12 moves downward to a bottom dead point (the first displacement 1a is the length of 0.1 to 0.6 of the stacking areas 21). Then, the stacking platform 12 starts to move upward and returns to the top dead point (the stacking platform 12 moves up and down for one cycle, which exactly corresponds to the length of one stacking area 21 conveyed by the two rollers). Then, the stacking platform 12 starts to move downward and starts the next movement cycle until the stacking is completed. It should be noted that each time the stacking platform 12 completes one movement cycle, it synchronously moves downward by the thickness of about 1 to 5 stacking areas 21 of the electrode plate group 20.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The aforementioned examples merely illustrate several embodiments of the present application, which are described in a specific and detailed manner, but should not be construed as limiting the patent scope of the present application. It should be noted that various changes and modifications can be made by those skilled in the art without departing from the concept of the present application, and these changes and modifications all shall fall within the protection scope of the present application. Therefore, the scope of protection of the patent in the present application shall be subjected to the appended claims.

## Claims

1. An electrode plate folding control method, an electrode plate folding mechanism (10) comprising a stacking platform (12) and a conveying component (11) configured to convey an electrode plate group (20), wherein the electrode plate group (20) is provided with a plurality of stacking areas (21) along a length direction thereof;
the electrode plate folding control method comprises the following steps:
controlling the conveying component (11) to drive the electrode plate group (20) to be conveyed towards the stacking platform (12); and
controlling, in response to the stacking areas (21) being folded on the stacking platform (12), the conveying component (11) and/or the stacking platform (12) to continuously and periodically execute a movement strategy in a preset direction (X), the movement strategy comprising driving at least one of the conveying component (11) and the stacking platform (12) to move in a direction away from each other; and driving at least one of the conveying component (11) and the stacking platform (12) to move in a direction close to each other, wherein the preset direction (X) is a direction in which the conveying component (11) is spaced from the stacking platform (12).

2. The electrode plate folding control method according to claim 1, wherein in the step of executing the movement strategy, the method comprises:
controlling a movement amount of at least one of the conveying component (11) and the stacking platform (12) in the direction away from each other to be a first displacement (1a); and
controlling a movement amount of at least one of the conveying component (11) and the stacking platform (12) in the direction close to each other to be a second displacement (1b), wherein the second displacement (1b) is less than or equal to the first displacement (1a).

3. The electrode plate folding control method according to claim 2, wherein the first displacement (1a) is greater than the second displacement (1b), and a difference value therebetween is denoted as Δ_{W}, and a thickness of the electrode plate group (20) in the stacking areas (21) is denoted as h, wherein 1 ≤ Δ_{W/h} ≤ 5.

4. The electrode plate folding control method according to claim 3, wherein Δ_{W/h} further satisfies the following condition: 2 ≤ Δ_{W/h} ≤ 3.

5. The electrode plate folding control method according to claim 2, wherein after the step of controlling the movement amount of the at least one of the conveying component (11) and the stacking platform (12) in the direction close to each other to be the second displacement (1b), the method comprises:
controlling, in response to each time executing the movement strategy at least once, the conveying component (11) and/or the stacking platform (12) to move by a preset displacement amount (1d) in the direction away from each other if the first displacement (1a) is equal to the second displacement (1b).

6. The electrode plate folding control method according to claim 5, wherein a ratio of the preset displacement amount (1d) to a thickness of the electrode plate group (20) in the stacking areas (21) is denoted as α, wherein 1 ≤ α ≤ 5.

7. The electrode plate folding control method according to claim 6, wherein α further satisfies the following condition: 2 ≤ α ≤ 3.

8. The electrode plate folding control method according to any one of claims 2 to 7, wherein in a case that at least one of the conveying component (11) and the stacking platform (12) moves by the first displacement (1a) in the direction away from each other, a displacement amount of a conveying end (113) of the conveying component (11) conveying the electrode plate group (20) in a direction facing the stacking platform (12) is controlled to be a third displacement (1c), wherein the third displacement (1c) is greater than the first displacement (1a).

9. The electrode plate folding control method according to claim 8, wherein a ratio of the third displacement (1c) to a length of the stacking area (21) is denoted as η, wherein 0.3 ≤ η ≤ 0.7.

10. The electrode plate folding control method according to claim 9, wherein η further satisfies the following condition: 0.45 ≤ η ≤ 0.55.

11. The electrode plate folding control method according to any one of claims 8 to 10, wherein a ratio of the first displacement (1a) to the length of the stacking area (21) is denoted as λ, wherein 0.1 ≤ λ ≤ 0.6.

12. The electrode plate folding control method according to claim 11, wherein λ further satisfies the following condition: 0.4 ≤ λ ≤ 0.5.

13. The electrode plate folding control method according to any one of claims 1 to 12, wherein after the movement strategy is executed, the displacement amount of the conveying end (113) of the conveying component (11) conveying the electrode plate group (20) in the direction facing the stacking platform (12) is the length of at least one of the stacking areas (21).

14. The electrode plate folding control method according to any one of claims 1 to 13, wherein before the step of controlling the conveying component (11) and/or the stacking platform (12) to continuously and periodically execute the movement strategy in the preset direction (X), the method further comprises:
controlling a minimum distance between the conveying end (113) of the conveying component (11) and a working surface (121) of the stacking platform (12) to be an initial distance (1e), wherein a ratio of the initial distance (1e) to the length of the stacking area (21) is denoted as γ, wherein 1.2 ≤ γ ≤ 2.

15. The electrode plate folding control method according to claim 14, wherein γ further satisfies the following condition: 1.3 ≤ γ ≤ 1.6.

16. The electrode plate folding control method according to claim 14 or 15, wherein in response to the step of the stacking areas (21) being folded on the stacking platform (12), the method comprises:
controlling the displacement amount of the conveying end (113) of the conveying component (11) conveying the electrode plate group (20) in the direction facing the stacking platform (12) to be a fourth displacement, wherein a ratio of the fourth displacement to the length of the stacking area (21) is denoted as ε, wherein 2 ≤ ε ≤ 10.

17. The electrode plate folding control method according to claim 16, wherein ε further satisfies the following condition: 2.1 ≤ ε ≤ 2.9.

18. An electrode plate folding control apparatus, adopting the electrode plate folding control method according to any one of claims 1 to 17, wherein the electrode plate folding control apparatus comprises:
a response module (200), configured to determine whether the stacking areas (21) are folded on the stacking platform (12); and
an execution module (300), configured to control the conveying component (11) to operate and control the conveying component (11) and/or the stacking platform (12) to move according to a signal fed back by the response module (200).

19. An electrode plate folding apparatus, adopting the electrode plate folding control method according to any one of claims 1 to 17, wherein the electrode plate folding apparatus comprises:
an electrode plate folding mechanism (10), comprising the stacking platform (12) and the conveying component (11) configured to convey the electrode plate group (20) and fold the electrode plate group (20) back and forth on the stacking platform (12); and
a driving mechanism (30), configured to drive the conveying component (11) and/or the stacking platform (12) to move.

20. The electrode plate folding apparatus according to claim 19, wherein the conveying component (11) and the stacking platform (12) are spaced apart along the preset direction (X), and the driving mechanism (30) is configured to drive at least one of the conveying component (11) and the stacking platform (12) to move back and forth in the preset direction (X).

21. A battery production system, wherein the battery production system comprises the electrode plate folding apparatus according to claim 19 or 20.
